# EUROPÄISCHE PATENTSCHRIFT

(11) **EP 4 556 196 B1**
(45) Veröffentlichungstag und Bekanntmachung des Hinweises auf die Patenterteilung: **06.05.2026**
(21) Anmeldenummer: 23210400.0
(22) Anmeldetag: 16.11.2023
(51) Int. Cl.: B29C 48/92, G01B 11/06, G01B 11/12, G01L 5/105, G01M 11/00, G01N 21/17, G01N 21/958

(54) **VERFAHREN UND VORRICHTUNG ZUM BESTIMMEN EINER VERSPANNUNG EINES GEGENSTANDS**
METHOD AND DEVICE FOR DETERMINING A STRAIN ON AN OBJECT
PROCÉDÉ ET DISPOSITIF DE DÉTERMINATION D'UNE CONTRAINTE D'UN OBJET

(43) Veröffentlichungstag der Anmeldung: 21.05.2025
(73) Patentinhaber: SIKORA AG, 28307 Bremen (DE)
(72) Erfinder: SCHUH, Kolja Tobias, 28307 Bremen (DE)
(74) Vertreter: Hauck Patent- und Rechtsanwälte PartmbB

(56) Entgegenhaltungen:
- EP-A1- 4 209 752
- EP-A2- 2 078 944
- DE-B4- 102020 124 261
- "PS-100 Polarimeter/Polariscope Systems. For observation and measurement of residual stress and birefringence", STRAINOPTICS BULLETIN PS-1009, 1 January 2009 (2009-01-01), North Wales, PA 19454 USA, pages 1 - 4, XP055041190, Retrieved from the Internet <URL:http://www.strainoptics.com/files/PS-100 Bulletin.pdf> [retrieved on 20121016]
- CHU P L ET AL: "AN ON-LINE FIBER DRAWING TENSION AND DIAMETER MEASUREMENT DEVICE", JOURNAL OF LIGHTWAVE TECHNOLOGY, IEEE, USA, vol. 7, no. 2, 1 February 1989 (1989-02-01), pages 255 - 261, XP000082557, ISSN: 0733-8724, DOI: 10.1109/50.17764

## Beschreibung

Die Erfindung betrifft ein Verfahren und eine Vorrichtung zum Bestimmen einer Verspannung eines Gegenstands, insbesondere eines strangförmigen Gegenstands.

Beispielsweise extrudierte Kunststoffrohre, Glasrohre oder Glasfasern durchlaufen nach ihrer Herstellung einen Abkühlvorgang. Während des Abkühlvorgangs bilden sich in dem Material des Gegenstands Verspannungen, die in der Hauptsache durch ungleichmäßiges Abkühlen verursacht sind. Diese Verspannungen können sich nachteilig auf die Produkteigenschaften auswirken. Dementsprechend sollen sie vermieden werden oder durch nachträgliches gezieltes Erhitzen reduziert werden.

Zur Bestimmung von Verspannungen in Glasfasern sind optische Messverfahren bekannt, die ausnutzen, dass Verspannungen zu einer Doppelbrechung des eingestreuten Lichts führen. Bei optischen Messverfahren wird linear polarisiertes Licht auf ein Messobjekt gerichtet, das die lineare Polarisation abhängig vom Produkt der Doppelbrechung und der im Messobjekt zurückgelegten Wegstrecke in elliptische Polarisation umwandelt. Zur Bestimmung der Verspannung wird das Ausmaß der Elliptizität der Polarisation gemessen. Dabei wird ein optischer Aufbau verwendet, der die Elliptizität in Intensitäten überträgt, die sich messen lassen. Dies kann beispielsweise durch eine Lambda/4-Platte, einen Strahlteiler und zwei zueinander senkrecht ausgerichtete Polarisatoren in jeweils einem der aufgeteilten Strahlen realisiert werden. Ein solches Verfahren ist vorgeschlagen in Chu et al. "An on-line fibre drawing tension and diameter measurement device" Journal of Lightwave Technology, Vol. 7, Nr. 2, Februar 1989. Ein weiteres optisches Messverfahren zur Bestimmung von Verspannungen in Glasfasern der zuvor erläuterten Art ist aus EP 2 078 944 A2 bekannt.

Der Anwendungsbereich solcher Verfahren ist allerdings stark limitiert. Zum einen sind sie nur in optisch transparenten Materialien einsetzbar. Zum anderen erlauben diese Ansätze nur die Messung sehr kleiner Spannungsunterschiede in sehr dünnen Materialien, da die Messverfahren drauf angewiesen sind, dass sich die optischen Weglängen der Polarisationen nur um einen Bruchteil der verwendeten Wellenlänge unterscheiden. Außerdem ist für die Auswertung eine Vielzahl optischer Komponenten erforderlich, was den Messaufbau aufwendig macht.

DE 10 2020 124 261 B4 beschreibt ein Verfahren und eine Vorrichtung zum Bestimmen des Brechungsindex im Oberflächenbereich eines Gegenstands. Dabei wird Terahertzstrahlung unter einem Einfallswinkel auf die Oberfläche des Gegenstandes ausgesandt und von der Oberfläche des Gegenstandes reflektierte Terahertzstrahlung empfangen. Aus dem Verhältnis von eingestrahlter und reflektierter Terahertzstrahlung wird der Brechungsindex im Oberflächenbereich des Gegenstandes bestimmt. Bei der Bestimmung des Brechungsindex wird ein Einfluss der Oberflächeneigenschaften des Gegenstandes auf den Anteil reflektierter Terahertzstrahlung berücksichtigt. Zusätzlich wird der mittlere Brechungsindex über den Querschnitt des Gegenstandes bestimmt und aus einem Vergleich des mittleren Brechungsindex mit dem Brechungsindex im Oberflächenbereich auf eine Schrumpfung des Gegenstandes im Zuge seiner vollständigen Erkaltung auf Umgebungstemperatur geschlossen.

Aus EP 4 209 752 A1 ist ein Verfahren zur Kalibrierung einer stationären Terahertzmessvorrichtung bekannt, die während einer Extrusion eines Profils geometrische Eigenschaften des Profils mittels ein oder mehrerer Terahertzsensoren vermisst. Dabei werden eine Referenzmessung einer Wanddicke an einer Messstelle eines Profilstücks mittels eines Referenzmessgerätes sowie eine Vermessung des Profilstücks an der Messstelle mittels eines tragbaren Terahertzmessgeräts. Das mit dem tragbaren Terahertzmessgerät ermittelte Messsignal wird auf Grundlage des mit dem Referenzmessgerät ermittelten Messsignals unter Ermittlung eines Brechungsindex des Profilstücks kalibriert.

Aus "PS-100 Polarimeter/Polariscope Systems. For observation and measurement of residual stress and birefringence", Strainoptics Bulletin PS-1009, 1. Januar 2009 ist ein Polarimeter der Firma Strainoptics bekannt, mit dem beispielsweise durch eine Messung einer optischen Verzögerung eine Verspannung oder Doppelbrechung mittels ebener oder zirkularer Polarisation möglich sein soll.

Ausgehend von dem erläuterten Stand der Technik liegt der Erfindung daher die Aufgabe zugrunde, ein Verfahren und eine Vorrichtung der eingangs genannten Art bereitzustellen, mit denen eine Verspannung eines Gegenstands in einfacher Weise und auch bei größeren Spannungsunterschieden und in dickeren Materialien möglich ist.

Die Erfindung löst die Aufgabe durch die unabhängigen Ansprüche 1 und 13. Vorteilhafte Ausgestaltungen finden sich in den abhängigen Ansprüchen, der Beschreibung und den Figuren.

Für ein Verfahren der eingangs genannten Art löst die Erfindung die Aufgabe durch die Schritte:
- der Gegenstand wird mit elektromagnetischer Strahlung mit einer Frequenz im Bereich von 1 GHz bis 10 THz und unterschiedlichen Polarisationsrichtungen bestrahlt, wobei die Strahlung den Gegenstand zumindest teilweise durchstrahlt und an Grenzflächen des Gegenstands reflektiert wird,
- die Strahlung wird nach dem zumindest teilweisen Durchstrahlen und Reflektieren an Grenzflächen des Gegenstands empfangen,
- aus der empfangenen Strahlung wird für die unterschiedlich polarisierten Strahlungsanteile jeweils der Brechungsindex des Materials des Gegenstands bestimmt,
- aus einem Vergleich der bestimmten Brechungsindexe wird eine Verspannung des Gegenstands bestimmt.

Für eine Vorrichtung der eingangs genannten Art löst die Erfindung die Aufgabe dadurch,
- dass mindestens ein Sender vorgesehen ist, der dazu ausgebildet ist, den Gegenstand mit elektromagnetischer Strahlung mit einer Frequenz im Bereich von 1 GHz bis 10 THz und unterschiedlichen Polarisationsrichtungen zu bestrahlen, wobei die Strahlung den Gegenstand zumindest teilweise durchstrahlt und an Grenzflächen des Gegenstands reflektiert wird,
- dass mindestens ein Empfänger vorgesehen ist, der dazu ausgebildet ist, die Strahlung nach dem zumindest teilweisen Durchstrahlen und Reflektieren an Grenzflächen des Gegenstands zu empfangen,
- und dass eine Auswerteeinrichtung vorgesehen ist, die dazu ausgebildet ist, aus der empfangenen Strahlung für die unterschiedlich polarisierten Strahlungsanteile jeweils den Brechungsindex des Materials des Gegenstands zu bestimmen, und aus einem Vergleich der bestimmten Brechungsindexe eine Verspannung des Gegenstands zu bestimmen.

Der erfindungsgemäß zu vermessende Gegenstand ist für die durch den Sender ausgesendete elektromagnetische Strahlung zumindest teiltransparent. Die Strahlung tritt also zumindest teilweise in den Gegenstand ein und wird an äußeren und inneren Grenzflächen des Gegenstands reflektiert. Ein Strahlungsanteil tritt, gegebenenfalls nach Reflektion an Grenzflächen des Gegenstands, nach Durchstrahlen des Gegenstands aus diesem aus und kann von dem Empfänger empfangen werden. Sender und Empfänger können auf gegenüberliegenden Seiten des Gegenstands angeordnet sein oder auf derselben Seite. Im letzteren Fall kann auf einer dem Sender und Empfänger gegenüberliegenden Seite des Gegenstands ein Reflektor angeordnet sein, der die Strahlung zurück zu dem Empfänger reflektiert. Der Sender und Empfänger können im Wesentlichen am selben Ort angeordnet sein.

Der Gegenstand kann zum Beispiel aus Kunststoff oder Glas bestehen. Es kann sich um einen strangförmigen Gegenstand handeln, zum Beispiel eine Glasfaser oder ein Rohr, insbesondere ein Kunststoff- oder Glasrohr. Der Gegenstand kann nach seiner Herstellung in einer Herstellvorrichtung, zum Beispiel einer Extrusionsvorrichtung oder einer Glasfaserherstellvorrichtung, zum Beispiel einer Glasfaserziehvorrichtung, noch in der Produktionslinie mit dem erfindungsgemäßen Verfahren bzw. der erfindungsgemäßen Vorrichtung vermessen werden. Die auf den Gegenstand ausgesendete elektromagnetische Strahlung wird auch als Terahertzstrahlung bezeichnet. Die Strahlung besitzt erfindungsgemäß eine Frequenz in einem Bereich von 1 GHz bis 10 THz. Dabei handelt es sich um die Grundfrequenz, um die herum die Strahlung in der Regel eine gewisse Bandbreite aufweist.

Aus der von dem Gegenstand reflektierten und den Gegenstand gegebenenfalls durchstrahlenden Strahlung kann der Brechungsindex des Materials des Gegenstands bestimmt werden, wie unten noch näher erläutert wird. Der Gegenstand wird mit Strahlung bestrahlt mit mindestens zwei, insbesondere genau zwei, Polarisationsrichtungen. Für die unterschiedlich polarisierten Strahlungsanteile wird erfindungsgemäß jeweils der Brechungsindex ermittelt. Die vorliegend betrachteten, in der Regel amorphen Materialien weisen unter Spannung eine Doppelbrechung auf. Wird der Gegenstand mit mindestens zwei verschiedenen Polarisationen durchstrahlt, in deren einen Richtung eine Verspannung vorliegt und deren andere Richtung beispielsweise senkrecht zur Verspannung liegt, erfahren die verschiedenen Polarisationsrichtungen unterschiedliche Brechungsindexe. Sofern eine Verspannung und damit eine Doppelbrechung vorliegt, unterscheiden sich die erfindungsgemäß gemessenen Brechungsindexe für die unterschiedlich polarisierten Strahlungsanteile folglich. Das Maß des Unterschieds der Brechungsindexe ist ein Maß für die Doppelbrechung, was wiederum ein Maß für die vorliegende Verspannung ist. Erfindungsgemäß werden dabei insbesondere absolute Werte der Brechungsindexe miteinander verglichen. Unter Kenntnis der materialspezifischen Doppelbrechung als Funktion der Verspannung kann von dem Brechungsindexunterschied auf den Spannungsunterschied in den betrachteten Richtungen der unterschiedlich polarisierten Strahlung geschlossen werden.

Anders als bei den zum Stand der Technik beschriebenen optischen Messverfahren werden erfindungsgemäß unterschiedliche Polarisationsrichtungen getrennt untersucht und für die unterschiedlichen Polarisationsrichtungen jeweils ein Brechungsindex ermittelt, deren Differenz die Doppelbrechung des Materials des Gegenstands abbildet. Die erfindungsgemäße Verwendung elektromagnetischer Strahlung mit einer Wellenlänge im Millimeter- oder Submillimeterbereich, und damit einer um mehrere Größenordnungen größeren Wellenlänge gegenüber dem im Stand der Technik verwendeten sichtbaren Licht, lässt zwar zunächst eine geringere Messgenauigkeit erwarten. Allerdings erlaubt die Verwendung von Strahlung mit größeren Wellenlängen eine eindeutige Auswertung größerer Weglängenunterschiede, so dass auch die Messung größerer Spannungsunterschiede in dickeren Gegenständen möglich ist. Verstärkt wird dieser Vorteil durch die Möglichkeit einer kohärenten Messung von elektromagnetischer Strahlung mit einer Wellenlänge im Millimeter-oder Submillimeterbereich. Damit können auch Weglängenunterschiede, die größer sind als eine Wellenlänge, eindeutig ausgewertet werden, wodurch noch größere Spannungsunterschiede in noch dickeren Gegenständen betrachtet werden können. Insbesondere ist durch Verwendung einer kohärenten Messung eine Auswertung der Phase der Strahlung in zuverlässiger Weise möglich, wodurch erheblich genauere Messergebnisse erreichbar sind als bei der im Stand der Technik vorgeschlagenen optischen Messung von Strahlungsintensitäten. Der eigentlich nachteilige Effekt der Verwendung von Strahlung größerer Wellenlänge kann damit mindestens teilweise kompensiert werden. Gleichzeitig können die im Stand der Technik erforderlichen aufwendigen optischen Komponenten vermieden werden. Die erfindungsgemäße Messung erfolgt dabei berührungslos und kann entsprechend auch in einer Produktionslinie zur Herstellung des Gegenstands problemlos eingesetzt werden. Außerdem können auch optisch intransparente Materialien vermessen werden. Auf Grundlage der empfangenen Strahlung kann in vorteilhafter Weise auch die Wanddicke des Gegenstands gemessen werden.

Die Erfindung ist darüber hinaus in einfacher Weise in bestehende Produktionslinien integrierbar, insbesondere wenn diese bereits mit einer Messvorrichtung mit Sendern und Empfängern für elektromagnetische Strahlung im Millimeter- oder Submillimeterwellenlängenbereich ausgestattet sind.

Die erfindungsgemäße Vorrichtung kann den Gegenstand umfassen. Sie kann auch eine Herstellvorrichtung zur Herstellung des Gegenstands umfassen, zum Beispiel eine Extrusionsvorrichtung oder eine Glasfaserherstellvorrichtung. Auch kann die Vorrichtung eine Erhitzungsvorrichtung umfassen zum nachfolgenden Erhitzen des Gegenstands zum Reduzieren einer Verspannung. Der Gegenstand kann während der Messung durch den Messbereich der Vorrichtung gefördert werden, insbesondere entlang seiner Längsachse. Die Vorrichtung kann auch eine hierzu vorgesehene Fördereinrichtung umfassen. Die Hauptstrahlrichtung der auf den Gegenstand ausgesendete Strahlung kann senkrecht zur Längsachse des Gegenstands verlaufen.

Grundsätzlich ist das Durchführen der Erfindung mit einem Paar aus einem Sender und einem Empfänger für die elektromagnetische Strahlung möglich. Es können aber auch mehrere Paare, zum Beispiel zwei Paare aus Sendern und Empfängern vorgesehen sein. Im ersten Fall kann beispielsweise durch einen drehbaren Polarisator oder, bei einem polarisierte Strahlung aussendenden Sender, einem drehbaren Sender und Empfänger, der Gegenstand nacheinander mit Strahlung unterschiedlicher Polarisationsrichtungen bestrahlt werden. Im zweiten Fall können die Sender der unterschiedlichen Paare unterschiedlich polarisierte Strahlung aussenden oder durch einen Polarisator oder mehrere Polarisatoren erzeugt werden, wobei die Empfänger dann die entsprechend polarisierte Strahlung des ihnen zugeordneten Senders empfangen. Im zweiten Fall können die Sender zeitgleich oder zeitlich versetzt Strahlung unterschiedlicher Polarisationsrichtungen auf den Gegenstand aussenden.

Wie bereits erläutert, kann der Gegenstand eine Glasfaser oder ein Rohr, insbesondere ein Kunststoffrohr oder ein Glasrohr sein.

Die den Gegenstand bestrahlende Strahlung kann senkrecht zueinander polarisierte Strahlungsanteile aufweisen. Wie bereits erwähnt, kann die Strahlung linear polarisiert sein. Es können insbesondere genau zwei unterschiedliche Polarisationsrichtungen vorliegen. Die vorgenannte Ausgestaltung erleichtert die Auswertung zur Bestimmung der Verspannung.

Nach einer weiteren Ausgestaltung kann der Brechungsindex aus einem Vergleich der Laufzeit der Strahlung bei in einem Messbereich angeordneten Gegenstand mit der Laufzeit der Strahlung durch den Messbereich ohne darin angeordneten Gegenstand bestimmt werden. Ein solches Verfahren zur Bestimmung des Brechungsindex aus der empfangenen Strahlung ist zum Beispiel bekannt aus WO 2016/139155 A1. Dabei wird die durch den Gegenstand verursachte Laufzeitveränderung der Strahlung durch den Messbereich ausgewertet, die ein Maß für den Brechungsindex des Gegenstands ist. Dies erfolgt erfindungsgemäß entsprechend für die unterschiedlich polarisierten Strahlungsanteile, so dass der jeweilige Brechungsindex bestimmt wird.

Nach einer weiteren Ausgestaltung, die insbesondere bei rohrförmigen Gegenständen zum Einsatz kommen kann, können aus der empfangenen Strahlung die optische Wanddicke eines Wandabschnitts des Gegenstands sowie der Außen- und Innendurchmesser des Gegenstands bestimmt werden. Der Brechungsindex kann dann aus einem Vergleich der Außen- und Innendurchmesser des Gegenstands mit der bestimmten optischen Wanddicke des Wandabschnitts bestimmt werden. Dieses Verfahren zur Bestimmung des Brechungsindex ist zum Beispiel in DE 10 2018 128 248 B1 beschrieben. Wiederum kann dieses Verfahren jeweils für die unterschiedlich polarisierten Strahlungsanteile durchgeführt werden, so dass wiederum die jeweiligen Brechungsindexe bestimmt werden.

Wie eingangs erläutert, besitzen beispielsweise in einer Extrusionsvorrichtung oder einer Glasfaserherstellvorrichtung hergestellte Gegenstände nach ihrer Herstellung zunächst noch eine sehr hohe Temperatur. Sie durchlaufen anschließend einen Abkühlvorgang, der häufig durch eine oder mehrere Kühlvorrichtungen beschleunigt und/oder gesteuert wird. Der erfindungsgemäß vermessene Gegenstand kann sich während der Durchführung des erfindungsgemäßen Verfahrens entsprechend in einem Abkühlvorgang nach seiner Herstellung befinden. Er kann während der Durchführung des Verfahrens noch nicht erstarrte Bereiche aufweisen, also noch Schmelzeanteile aufweisen.

Auf Grundlage der Bestimmung der Verspannung kann ein Erstarrungsgrad des Gegenstands bestimmt werden, also wie weit die vollständige Erstarrung des Gegenstands fortgeschritten ist. Bei der Bestimmung des Erstarrungsgrads können zusätzlich die bestimmten Brechungsindexe berücksichtigt werden. Schmelze weist aufgrund ihrer noch recht hohen Beweglichkeit keine signifikante Verspannung und damit auch keine signifikante Doppelbrechung auf. Daher kann die erfindungsgemäße Bestimmung der Verspannung auch dazu eingesetzt werden, den Grad der Erstarrung während des Abkühlvorgangs zu messen bzw. nachzuverfolgen. Wie erläutert, kann die Bestimmung der Verspannung mit der Messung der Brechungsindexe kombiniert werden, um bessere Aussagen zu ermöglichen, da beide Größen unterschiedlich auf das Erstarren bzw. Verfestigen reagieren. Die Messung der mittleren Verspannung einer Wand des Gegenstands erlaubt eine Bestimmung des erstarten Anteils, sofern das Ausmaß der Verspannung in dem vollständig erstarrten Teil hinreichend genau abgeschätzt werden kann. Eine derartige Abschätzung kann auf Grundlage von Prozessparametern oder empirisch ermittelten Werten erfolgen. Der Brechungsindex ändert sich typischerweise stark beim Übergang zwischen Schmelze und erstarrtem Zustand, insbesondere sehr viel stärker als durch Doppelbrechung. Der über die Wand des Gegenstands ermittelte mittlere Brechungsindex kann daher eine zusätzliche Information über den Erstarrungsgrad liefern. Diese Information kann zusätzlich genutzt werden, um die Bestimmung des Schmelzeanteils robuster zu gewährleisten. Auf diese Weise können insbesondere Abhängigkeiten von Prozessparametern oder Erfahrungswerten reduziert werden. Hierzu können die Zusammenhänge zwischen mittlerer Verspannung, mittlerem Brechungsindex, und Prozessparametern zum Erstarrungsgrad zum Beispiel empirisch bestimmt werden.

Auf Grundlage der bestimmten Verspannung kann weiterhin eine Extrusionsvorrichtung zur Extrusion des Gegenstands oder eine Glasfaserherstellvorrichtung zur Herstellung des Gegenstands gesteuert bzw. geregelt werden. Eine solche Steuerung bzw. Regelung ist insbesondere auf Grundlage einer wiederholten oder kontinuierlichen Bestimmung der Verspannung möglich. Die Steuerung bzw. Regelung kann durch die Auswerteeinrichtung der erfindungsgemäßen Vorrichtung erfolgen.

Es ist auch möglich, auf Grundlage der bestimmten Verspannung eine nachfolgende Erhitzung des Gegenstands zum Reduzieren einer Verspannung zu steuern. Auch ist es möglich, eine solche Erhitzung zum Beispiel nur nach Bedarf vorzusehen. Wie eingangs erläutert, ist es bekannt, zum Abbau von Verspannungen eine nachträgliche Erhitzung des Gegenstands vorzusehen. Durch die erfindungsgemäße Berücksichtigung der bestimmten Verspannung kann eine solche Erhitzung gezielt zur Optimierung eingesetzt werden. Durch Vermeiden unnötiger Erhitzungen kann Energie gespart werden.

Die Verspannung kann anhand eines vorab erstellten Zusammenhangs zwischen einer Doppelbrechung und einer Verspannung des Gegenstands bestimmt werden. Der Zusammenhang kann empirisch für das jeweilige Material des Gegenstands ermittelt werden. Er kann aber auch anhand von zum Beispiel einzelnen, zum Beispiel empirischen Daten, für nicht bekannte Datenbereiche approximiert werden. Es ist auch möglich, den Zusammenhang anhand der erfindungsgemäß ermittelten Messergebnisse anzupassen.

Wie eingangs erläutert, werden die erfindungsgemäßen Vorteile verstärkt, wenn die den Gegenstand durchdrängende bzw. die von dessen Grenzflächen reflektierte Strahlung kohärent gemessen wird. Es kann sich insbesondere um FMCW-Strahlung (Frequency Modulated Continous Wave-Strahlung), insbesondere FMCW-Radarstrahlung handeln.

Nach einer weiteren Ausgestaltung kann vorgesehen sein, dass zwischen dem Sender und einem den Gegenstand während einer Messung aufnehmenden Messbereich ein Polarisator angeordnet ist, wobei der Polarisator eine Dreheinrichtung aufweist, mit der der Polarisator während einer Messung gedreht werden kann, um unterschiedliche Polarisationsrichtungen der auf den Gegenstand ausgesendeten Strahlung zu erzeugen. Bei dieser Ausgestaltung kann der Sender unpolarisierte Strahlung aussenden, die durch den Polarisator dann beispielsweise linear polarisiert wird. Durch eine Drehung des Polarisators, beispielsweise um 90°, kann die Polarisationsrichtung, mit der der Gegenstand durchstrahlt wird, unterschiedlich festgelegt werden. Beispielsweise kann der Polarisator rotiert werden, um in schneller Folge Messungen mit unterschiedlichen Polarisationsrichtungen durchzuführen. Es ist auch möglich, dass der Sender polarisierte Strahlung aussendet, wobei der Sender eine Dreheinrichtung aufweist, mit der der Sender während der Messung gedreht werden kann. In diesem Fall kann auf den (drehbaren) Polarisator verzichtet werden. Wiederum kann der Sender beispielsweise um 90° gedreht werden, beispielsweise in schneller Folge rotiert werden, um Messungen mit unterschiedlichen Polarisationsrichtungen durchzuführen.

Nach einer weiteren Ausgestaltung kann vorgesehen sein, dass zwei Sender für das Aussenden der Strahlung vorgesehen sind, wobei zwischen den Sendern und einem den Gegenstand während einer Messung aufnehmenden Messbereich ein Polarisationsspiegel angeordnet ist, wobei die Sender derart angeordnet sind, dass sie gegenüberliegende Seiten des Polarisationsspiegels bestrahlen. Die Sender können ausgebildet sein, die Strahlung zeitlich versetzt auszusenden. Die von den Sendern ausgesendete Strahlung kann jeweils unpolarisiert sein. Bei den vorgenannten Ausgestaltungen können entsprechend auch zwei Empfänger vorgesehen sein, so dass zwei Paare aus einander zugeordnetem Sender und Empfänger vorgesehen sind.

Mit den vorgenannten Ausgestaltungen ist eine praktisch simultane Messung verschiedener Polarisationsrichtungen möglich, was beispielsweise bei einer Veränderung des Gegenstands, insbesondere der Eigenschaften des Gegenstands an der Messposition, in einer in Bezug zur Messrate nicht vernachlässigbaren Rate erforderlich sein kann. Polarisationsspiegel sind transparent für eine Polarisationsrichtung und reflektierend für eine dazu senkrechte Polarisationsrichtung. Bei den vorgenannten Ausgestaltungen ist eine Messung mit identischer optischer Achse möglich, indem die Sender auf die einander gegenüberliegenden Seiten des Polarisationsspiegels gerichtet sind. Die Hauptstrahlrichtungen der Sender können dabei im Wesentlichen auf dieselbe Position auf gegenüberliegenden Seiten des Polarisationsspiegels gerichtet sein. Durch die Ausgestaltung des Polarisationsspiegels gelangt jeweils lediglich eine Polarisationsrichtung der auf diesen eintreffenden Strahlung zu dem Gegenstand. Durch entsprechende Anordnung der Sender in Bezug auf den Polarisationsspiegel wird die Strahlung des einen Senders durch den Polarisationsspiegel transmittiert, wobei diese durchgelassene Strahlung in einer ersten Polarisationsrichtung polarisiert ist. Die von dem zweiten Sender auf die gegenüberliegende Seite des Polarisationsspiegels ausgesandte Strahlung wird mit einer zweiten, gegenüber der ersten Polarisationsrichtung senkrechten Polarisationsrichtung von diesem auf den Gegenstand reflektiert. Der nicht transmittierte Strahlungsanteil des ersten Senders wird von dem Polarisationsspiegel von dem Gegenstand weg reflektiert und der nicht von dem Polarisationsspiegel reflektierte Strahlungsanteil des zweiten Senders wird von dem Polarisationsspiegel in eine Richtung von dem Gegenstand weg transmittiert. Auf einer dem Polarisationsspiegel gegenüberliegenden Seite des Gegenstands kann ein Reflektor angeordnet sein, der die unterschiedlich polarisierten Strahlungsanteile nach Durchstrahlen des Gegenstands zurück zu dem Polarisationsspiegel reflektiert, wo diese jeweils zu einem beispielsweise am selben Ort wie dem Sender angeordneten Empfänger gelangen, wiederum in Transmission zu einem ersten Empfänger und in Reflektion zu einem zweiten Empfänger. Ein solcher Polarisationsspiegel kann beispielsweise durch ein Metallgitter realisiert werden. Durch Vorsehen eines geringen zeitlichen Versatzes, beispielsweise von weniger als 1000 ns, insbesondere weniger als 500 ns, beispielsweise weniger als 200 ns, kann sichergestellt werden, dass nur die von einem Sender abgestrahlte Strahlung von dem zugeordneten Empfänger empfangen wird. Auf diese Weise kann verhindert werden, dass Anteile des anderen Senders, deren Polarisation durch den Messaufbau, inklusive dem Gegenstand, verändert wurden, die Messung beeinträchtigen.

Gemäß einer besonders praxisgemäßen Ausgestaltung können der Sender und der Empfänger durch einen Transceiver gebildet sein, wobei auf einer den Gegenstand während einer Messung aufnehmenden Messbereich gegenüberliegenden Seite ein Reflektor für die Strahlung angeordnet ist. Sofern mehrere Paare von Sendern und Empfängern vorgesehen sind, können diese jeweils durch einen Transceiver gebildet sein. Natürlich ist es auch möglich, Sender und Empfänger getrennt auszubilden, wobei die von diesen abgestrahlte bzw. empfangene Strahlung in gleicher Weise polarisiert sein müsste. Sender und Empfänger können dann wie bereits erläutert auf gegenüberliegenden Seiten des Gegenstands angeordnet sein.

Das erfindungsgemäße Verfahren kann mit einer erfindungsgemäßen Vorrichtung durchgeführt werden. Die erfindungsgemäße Vorrichtung kann entsprechend dazu ausgebildet sein, das erfindungsgemäße Verfahren durchzuführen.

Ausführungsbeispiele der Erfindung werden nachfolgend anhand von Figuren näher erläutert. Es zeigen schematisch:
- Figur 1: eine erfindungsgemäße Vorrichtung zum Bestimmen der Verspannung eines Gegenstands nach einem ersten Ausführungsbeispiel, und
- Figur 2: eine erfindungsgemäße Vorrichtung zum Bestimmen der Verspannung eines Gegenstands nach einem zweiten Ausführungsbeispiel.

Soweit nichts anderes angegeben ist, bezeichnen in den Figuren gleiche Bezugszeichen gleiche Gegenstände.

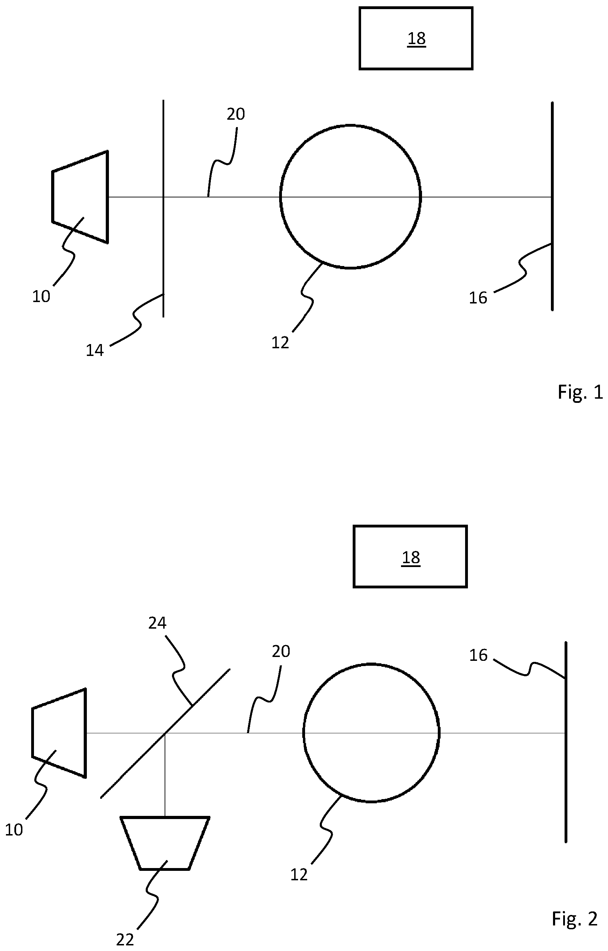

Die in Figur 1 dargestellte Vorrichtung umfasst einen Transceiver 10, umfassend einen Sender für elektromagnetische Strahlung mit einer Wellenlänge im Millimeter-oder Submillimeterbereich. Der Transceiver 10 umfasst außerdem einen Empfänger zum Empfangen der von dem Sender ausgesendeten Strahlung. In einem Messbereich der Vorrichtung befindet sich ein in dem dargestellten Beispiel rohrförmiger Gegenstand 12, bei dem es sich beispielsweise um ein Kunststoff- oder Glasrohr 12 handeln kann. Zwischen dem Transceiver 10 und dem Gegenstand 12 ist ein Polarisator 14 angeordnet, der die von dem Sender des Transceivers 10 ausgesendete unpolarisierte Strahlung in einer Polarisationsrichtung linear polarisiert. Der Polarisator 14 kann mit einer in Figur 1 nicht näher dargestellten Dreheinrichtung um mindestens 90° gedreht werden, so dass die Polarisationsrichtung der Strahlung entsprechend gedreht wird. Auf der dem Transceiver 10 abgewandten Seite des Gegenstands 12 ist ein Reflektor 16 angeordnet, der die von dem Sender des Transceivers 10 ausgesendete Strahlung reflektiert. Die Vorrichtung umfasst außerdem eine Auswerteeinrichtung 18, an der die Messdaten des Empfängers anliegen, und die gleichzeitig eine Steuereinrichtung bilden kann zum Steuern des Senders des Transceivers 10, der Dreheinrichtung des Polarisators 14.

Der rohrförmige Gegenstand 12, dessen Längsachse in Figur 1 in die Zeichenebene hinein verläuft, kann während der Durchführung des erfindungsgemäßen Verfahrens entlang seiner Längsachse durch den Messbereich gefördert werden. Hierfür kann die Vorrichtung eine entsprechende nicht näher dargestellte Fördereinrichtung umfassen. Der rohrförmige Gegenstand 12 kann beispielsweise in einer Extrusionsvorrichtung hergestellt worden sein. Während des Durchlaufens des Messbereichs der Vorrichtung kann dieser sich in einem Abkühlvorgang nach seiner Herstellung befinden. Er kann noch nicht erstarrte Bereiche aufweisen.

Zur Durchführung des erfindungsgemäßen Verfahrens sendet der Sender des Transceivers 10 Strahlung quer zur Längsachse des Gegenstands 12 auf diesen aus, wie in Figur 1 bei dem Bezugszeichen 20 veranschaulicht. Die Strahlung ist nach Durchlaufen des Polarisators 14 linear polarisiert, durchstrahlt den Gegenstand 12 und gelangt zu dem Reflektor 16, der die Strahlung zurück zu dem Gegenstand 12 und nach erneutem Bestrahlen des Gegenstands 12 zurück zu dem Empfänger des Transceivers 10 reflektiert. Dabei wird die Strahlung auch an Grenzflächen des Gegenstands 12 reflektiert. Auch diese Strahlungsanteile werden von dem Empfänger empfangen. Während der Messung wird der Polarisator 14 mittels der Dreheinrichtung gedreht, beispielsweise im schnellen Wechsel um 90°, so dass der Gegenstand 12 abwechselnd mit Strahlung unterschiedlicher Polarisationsrichtungen, insbesondere mit senkrecht zueinander stehenden Polarisationsrichtungen bestrahlt wird. Der Empfänger des Transceivers 10 empfängt die jeweilige Strahlung nach Durchstrahlen und Reflektieren an den Grenzflächen des Gegenstands 12. Auf Grundlage der empfangenen Messdaten bestimmt die Auswerteeinrichtung 18 für die unterschiedlich polarisierten Strahlungsanteile der Strahlung jeweils den Brechungsindex des Materials des Gegenstands 12. Dies kann in einer der oben erläuterten Weisen erfolgen. Aus den Messdaten des Empfängers kann auch die Wanddicke des Gegenstands 12 bestimmt werden. Aus einem Vergleich der für die unterschiedlichen Polarisationsrichtungen bestimmten Brechungsindexe bestimmt die Auswerteeinrichtung 18 eine Verspannung des Gegenstands 12. Auf Grundlage der Bestimmung der Verspannung kann insbesondere unter Berücksichtigung der ermittelten Brechungsindexe auch ein Erstarrungsgrad des Gegenstands 12 bestimmt werden. Die Verspannung kann zum Beispiel anhand eines vorab erstellten Zusammenhangs zwischen einer Doppelbrechung und einer Verspannung des Gegenstands 12 bestimmt werden.

Auf Grundlage der bestimmten Verspannung und/oder des bestimmten Erstarrungsgrads kann eine den Gegenstand 12 erzeugende Extrusionsvorrichtung und/oder eine Erhitzungsvorrichtung zum nachträglichen Erhitzen des Gegenstands 12 angesteuert werden, um den Produktionsprozess des Gegenstands 12 zu optimieren. Dies kann ebenfalls durch die Auswerteeinrichtung 18 erfolgen.

Alternativ zu der in Figur 1 dargestellten Ausgestaltung wäre auch der Einsatz eines Transceivers 10 mit einem Sender möglich, der linear polarisierte Strahlung aussendet. In diesem Fall kann auf den Polarisator 14 verzichtet werden. Stattdessen kann der Transceiver 10 mit einer entsprechenden Dreheinrichtung während der Messung gedreht werden, beispielsweise im schnellen Wechsel um 90°.

Figur 2 zeigt ein weiteres Ausführungsbeispiel, das weitgehend dem in Figur 1 dargestellten Ausführungsbeispiel entspricht. Das in Figur 2 dargestellte Ausführungsbeispiel ist insbesondere geeignet, wenn sich die Eigenschaften des Gegenstands im Messbereich in einer in Bezug zu dem Wechsel der Polarisationsrichtungen bei dem Ausführungsbeispiel in Figur 1 nicht zu vernachlässigenden Rate ändern. In einem solchen Fall besteht das Risiko, dass sich schnell verändernde Eigenschaften des Gegenstands 12 aufgrund der in Figur 1 zeitlich versetzten Messung verfälschend auf das Messergebnis auswirken.

Zur Adressierung dieses Problems sind bei dem Ausführungsbeispiel nach Figur 2 zwei Transceiver 10, 22 vorgesehen, die jeweils ein Paar aus einem Sender und einem Empfänger gemäß dem zu Figur 1 erläuterten Transceiver 10 umfassen. Wie in Figur 2 zu erkennen, ist anstelle des Polarisators 14 ein gegenüber der Ebene des Reflektors 16 um 45° verdrehter Polarisationsspiegel 24 vorgesehen. Die Transceiver 10, 22 sind so angeordnet, dass die von ihren Sendern ausgesendete Strahlung im Wesentlichen am selben Ort auf gegenüberliegende Seiten des Polarisationsspiegels 24 auftreffen. Der Polarisationsspiegel 24 ist transparent für eine erste Polarisationsrichtung und reflektierend für eine dazu senkrechte zweite Polarisation. Die Transceiver 10, 22 gemäß Figur 2 können beispielsweise unpolarisiertes Licht aussenden.

Die von dem ersten Transceiver 10 ausgesendete Strahlung wird durch den Polarisationsspiegel 24 entsprechend aufgeteilt in einen den Polarisationsspiegel 24 in Richtung des Gegenstands 12 passierenden Strahlungsanteil, der in einer ersten Polarisationsrichtung linear polarisiert ist und einen übrigen Strahlungsanteil, der in Figur 2 durch den Polarisationsspiegel 24 nach oben von dem Gegenstand 12 weg reflektiert wird. Von dem Sender des zweiten Transceivers 22 auf den Polarisationsspiegel 24 ausgesendete Strahlung wird entsprechend aufgeteilt in einen von dem Polarisationsspiegel 24 in Richtung des Gegenstands 12 reflektierten in einer zweiten Polarisationsrichtung linear polarisierten Strahlungsanteil und einen den Polarisationsspiegel 24 transmittierenden. in Figur 2 nach oben von dem Gegenstand 12 wegführenden übrigen Strahlungsanteil.

Die durch den Polarisationsspiegel 24 auf den Gegenstand 12 geleiteten, in der ersten und zweiten Polarisationsrichtung linear polarisierten Strahlungsanteile der Sender des ersten und zweiten Transceivers 10, 22 sind senkrecht zueinander polarisiert. Sie bestrahlen den Gegenstand 12 im dargestellten Beispiel mit identischer optischer Achse. Die Strahlungsanteile treten wiederum durch den Gegenstand 12 hindurch, werden an seinen Grenzflächen reflektiert und von dem Reflektor 16 nach erneutem Bestrahlen des Gegenstands 12 zu dem Polarisationsspiegel 24 zurückreflektiert. Dieser lässt wiederum nur die gemäß der ersten bzw. zweiten Polarisationsrichtung polarisierten Strahlungsanteile zu den ersten und zweiten Empfängern des ersten und zweiten Transceivers 10, 22 hindurch. Die von dem Polarisationsspiegel 24 jeweils von dem Gegenstand 12 bzw. den Empfängern weggeleiteten Strahlungsanteile sind in Figur 2 aus Gründen der Veranschaulichung nicht dargestellt.

Mit der in Figur 2 dargestellten Anordnung ist eine simultane Bestrahlung des Gegenstands 12 mit Strahlung der unterschiedlichen Polarisationsrichtungen möglich. Die Auswerteeinrichtung 18 bestimmt in der oben zu Figur 1 erläuterten Weise wiederum die Verspannung des Gegenstands 12 aus den für die unterschiedlichen Polarisationsrichtungen bestimmten Brechungsindexen. Wiederum kann dabei auch die bestimmte Wanddicke des Gegenstands 12 berücksichtigt werden.

Ein solcher Polarisationsspiegel 24 kann beispielsweise durch ein Metallgitter realisiert werden. Alternativ zur Verwendung des Polarisationsspiegels 24 könnten auch bei dem Ausführungsbeispiel nach Figur 2 wiederum Transceiver 10, 22 eingesetzt werden, die bereits entsprechend in der ersten und zweiten Polarisationsrichtung polarisierte Strahlung aussenden und empfangen. Der Polarisationsspiegel 24 könnte dann durch einen Strahlteiler ersetzt werden.

Auch bei dem Ausführungsbeispiel nach Figur 2 ist es möglich, einen geringen zeitlichen Versatz zwischen den Aussendungen der Transceiver 10, 22 vorzusehen. Als Versatz sind weniger als 1000 ns, insbesondere weniger als 500 ns, beispielsweise weniger als 200 ns, ausreichend. Auf diese Weise wird sichergestellt, dass nur die von einem Transceiver 10, 22 selbst ausgesendete Strahlung von dem jeweiligen Transceiver 10, 22 empfangen wird. Dadurch wird sicher verhindert, dass Strahlungsanteile von dem jeweils anderen Transceiver 10, 22, deren Polarisation durch den Messaufbau, inklusive des Gegenstands 12, verändert wurden, die Messung beeinträchtigen können.

### Bezugszeichen

- 10: Transceiver
- 12: Gegenstand
- 14: Polarisator
- 16: Reflektor
- 18: Auswerteeinrichtung
- 20: Strahlung
- 22: Transceiver
- 24: Polarisationsspiegel

## Patentansprüche

1. Verfahren zum Bestimmen einer Verspannung eines Gegenstands, insbesondere eines strangförmigen Gegenstands (12), mit den Schritten:
• der Gegenstand (12) wird mit elektromagnetischer Strahlung (20) mit einer Frequenz im Bereich von 1 GHz bis 10 THz und unterschiedlichen Polarisationsrichtungen bestrahlt, wobei die Strahlung (20) den Gegenstand (12) zumindest teilweise durchstrahlt und an Grenzflächen des Gegenstands (12) reflektiert wird,
• die Strahlung (20) wird nach dem zumindest teilweisen Durchstrahlen und Reflektieren an Grenzflächen des Gegenstands (12) empfangen,
• aus der empfangenen Strahlung (20) wird für die unterschiedlich polarisierten Strahlungsanteile jeweils der Brechungsindex des Materials des Gegenstands (12) bestimmt,
• aus einem Vergleich der bestimmten Brechungsindexe wird eine Verspannung des Gegenstands (12) bestimmt.

2. Verfahren nach Anspruch 1, **dadurch gekennzeichnet, dass** der Gegenstand (12) eine Glasfaser oder ein Rohr (12), insbesondere ein Kunststoffrohr (12) oder ein Glasrohr (12), ist.

3. Verfahren nach einem der vorhergehenden Ansprüche, **dadurch gekennzeichnet, dass** die den Gegenstand (12) bestrahlende Strahlung (20) senkrecht zueinander polarisierte Strahlungsanteile aufweist.

4. Verfahren nach einem der vorhergehenden Ansprüche, **dadurch gekennzeichnet, dass** der Brechungsindex aus einem Vergleich der Laufzeit der Strahlung (20) bei in einem Messbereich angeordnetem Gegenstand (12) mit der Laufzeit der Strahlung durch den Messbereich ohne darin angeordneten Gegenstand (12) bestimmt wird.

5. Verfahren nach einem der vorhergehenden Ansprüche, **dadurch gekennzeichnet, dass** der Gegenstand (12) rohrförmig ist, dass aus der empfangenen Strahlung (20) die optische Wanddicke eines Wandabschnitts des Gegenstands (12) sowie der Außen- und Innendurchmesser des Gegenstands (12) bestimmt werden, und dass der Brechungsindex aus einem Vergleich der Außen- und Innendurchmesser des Gegenstands (12) mit der bestimmten optischen Wanddicke des Wandabschnitts bestimmt wird.

6. Verfahren nach einem der vorhergehenden Ansprüche, **dadurch gekennzeichnet, dass** der Gegenstand (12) sich während der Durchführung des Verfahrens in einem Abkühlvorgang nach seiner Herstellung befindet.

7. Verfahren nach Anspruch 6, **dadurch gekennzeichnet, dass** der Gegenstand (12) während der Durchführung des Verfahrens noch nicht erstarrte Bereiche aufweist, und dass auf Grundlage der Bestimmung der Verspannung ein Erstarrungsgrad des Gegenstands (12) bestimmt wird.

8. Verfahren nach Anspruch 7, **dadurch gekennzeichnet, dass** bei der Bestimmung des Erstarrungsgrads zusätzlich die bestimmten Brechungsindexe berücksichtigt werden.

9. Verfahren nach einem der vorhergehenden Ansprüche, **dadurch gekennzeichnet, dass** auf Grundlage der bestimmten Verspannung eine Extrusionsvorrichtung zur Extrusion des Gegenstands (12) oder eine Glasfaserherstellvorrichtung zur Herstellung des Gegenstands (12) gesteuert oder geregelt wird.

10. Verfahren nach einem der vorhergehenden Ansprüche, **dadurch gekennzeichnet, dass** auf Grundlage der bestimmten Verspannung eine nachfolgende Erhitzung des Gegenstands (12) zum Reduzieren einer Verspannung gesteuert wird.

11. Verfahren nach einem der vorhergehenden Ansprüche, **dadurch gekennzeichnet, dass** die Verspannung anhand eines vorab erstellten Zusammenhangs zwischen einer Doppelbrechung und einer Verspannung des Gegenstands (12) bestimmt wird.

12. Verfahren nach einem der vorhergehenden Ansprüche, **dadurch gekennzeichnet, dass** die auf den Gegenstand (12) ausgesandte Strahlung (20) kohärent gemessen wird.

13. Vorrichtung zum Bestimmen einer Verspannung eines Gegenstands (12), insbesondere eines strangförmigen Gegenstands (12), wobei
• mindestens ein Sender (10, 22) vorgesehen ist, der dazu ausgebildet ist, den Gegenstand (12) mit elektromagnetischer Strahlung (20) mit einer Frequenz im Bereich von 1 GHz bis 10 THz und unterschiedlichen Polarisationsrichtungen zu bestrahlen, wobei die Strahlung (20) den Gegenstand (12) zumindest teilweise durchstrahlt und an Grenzflächen des Gegenstands (12) reflektiert wird,
• mindestens ein Empfänger (10, 22) vorgesehen ist, der dazu ausgebildet ist, die Strahlung (20) nach dem zumindest teilweisen Durchstrahlen und Reflektieren an Grenzflächen des Gegenstands (12) zu empfangen,
• und eine Auswerteeinrichtung (18) vorgesehen ist, die dazu ausgebildet ist, aus der empfangenen Strahlung (20) für die unterschiedlich polarisierten Strahlungsanteile jeweils den Brechungsindex des Materials des Gegenstands (12) zu bestimmen, und aus einem Vergleich der bestimmten Brechungsindexe eine Verspannung des Gegenstands (12) zu bestimmen.

14. Vorrichtung nach Anspruch 13, **dadurch gekennzeichnet, dass** zwischen dem Sender (10, 22) und einem den Gegenstand (12) während einer Messung aufnehmenden Messbereich ein Polarisator (14) angeordnet ist, wobei der Polarisator (14) eine Dreheinrichtung aufweist, mit der der Polarisator (14) während einer Messung gedreht werden kann, um unterschiedliche Polarisationsrichtungen der auf den Gegenstand (12) ausgesendeten Strahlung (20) zu erzeugen.

15. Vorrichtung nach Anspruch 13, **dadurch gekennzeichnet, dass** der Sender (10, 22) polarisierte Strahlung (20) aussendet, wobei der Sender (10, 22) eine Dreheinrichtung aufweist, mit der der Sender (10, 22) während der Messung gedreht werden kann.

16. Vorrichtung nach Anspruch 13, **dadurch gekennzeichnet, dass** zwei Sender (10, 22) für das Aussenden der Strahlung (20) vorgesehen sind, wobei zwischen den Sendern (10, 22) und einem den Gegenstand (12) während einer Messung aufnehmenden Messbereich ein Polarisationsspiegel (24) angeordnet ist, wobei die Sender (10, 22) derart angeordnet sind, dass sie gegenüberliegende Seiten des Polarisationsspiegels (24) bestrahlen.

17. Vorrichtung nach Anspruch 16, **dadurch gekennzeichnet, dass** die Sender (10, 22) ausgebildet sind, die Strahlung (20) zeitlich versetzt auszusenden.

18. Vorrichtung nach einem der Ansprüche 13 bis 17, **dadurch gekennzeichnet, dass** der Sender (10, 22) und der Empfänger (10, 22) durch einen Transceiver (10, 22) gebildet sind, wobei auf einer einem den Gegenstand (12) während einer Messung aufnehmenden Messbereich gegenüberliegenden Seite ein Reflektor (16) für die Strahlung (20) angeordnet ist.

## Claims

1. A method for determining a strain on an object, in particular a strand-shaped object (12), comprising the following steps:
• the object (12) is irradiated with electromagnetic radiation (20) at a frequency in the range of from 1 GHz to 10 THz and different polarization directions, wherein the radiation (20) at least partially passes through the object (12) and is reflected on boundary surfaces of the object (12),
• the radiation (20) is received after at least partially passing through the object (12) and being reflected on boundary surfaces thereof,
• the refractive index of the material of the object (12) is determined from the received radiation (20) in each case for the differently polarized radiation components,
• a strain on the object (12) is determined from a comparison of the determined refractive indices.

2. The method according to claim 1, **characterized in that** the object (12) is a glass fiber or a tube (12), in particular a plastics tube (12) or a glass tube (12).

3. The method according to one of the preceding claims, **characterized in that** the radiation (20) irradiating the object (12) has radiation components that are polarized perpendicular to one another.

4. The method according to one of the preceding claims, **characterized in that** the refractive index is determined from a comparison of the propagation time of the radiation (20) for an object (12) arranged in a measuring region with the propagation time of the radiation through the measuring region without an object (12) arranged therein.

5. The method according to one of the preceding claims, **characterized in that** the object (12) is tubular, **in that** the optical wall thickness of a wall portion of the object (12) and the outer and inner diameter of the object (12) are determined from the received radiation (20), and **in that** the refractive index is determined from a comparison of the outer and inner diameter of the object (12) with the determined optical wall thickness of the wall portion.

6. The method according to one of the preceding claims, **characterized in that** the object (12) is in a cooling process after being produced when the method is carried out.

7. The method according to claim 6, **characterized in that** the object (12) has regions that have not yet solidified when the method is carried out, and **in that** a degree of solidification of the object (12) is determined on the basis of the strain determination.

8. The method according to claim 7, **characterized in that** the determined refractive indices are additionally taken into account when the degree of solidification is determined.

9. The method according to one of the preceding claims, **characterized in that** an extrusion device for extruding the object (12) or a glass fiber production device for producing the object (12) is controlled in an open-loop or closed-loop manner on the basis of the determined strain.

10. The method according to one of the preceding claims, **characterized in that** a subsequent heating of the object (12) to reduce a strain is controlled on the basis of the determined strain.

11. The method according to one of the preceding claims, **characterized in that** the strain is determined based on a previously established relationship between a birefringence of and a strain on the object (12).

12. The method according to one of the preceding claims, **characterized in that** the radiation (20) emitted onto the object (12) is measured coherently.

13. A device for determining a strain on an object (12), in particular a strand-shaped object (12), wherein
• at least one transmitter (10, 22) is provided, which is designed to irradiate the object (12) with electromagnetic radiation (20) at a frequency in the range of from 1 GHz to 10 THz and different polarization directions, wherein the radiation (20) at least partially passes through the object (12) and is reflected on boundary surfaces of the object (12),
• at least one receiver (10, 22) is provided, which is designed to receive the radiation (20) after same has at least partially passed through the object (12) and been reflected on boundary surfaces thereof,
• and an evaluation apparatus (18) is provided, which is designed to determine the refractive index of the material of the object (12) from the received radiation (20) in each case for the differently polarized radiation components, and to determine a strain on the object (12) from a comparison of the determined refractive indices.

14. The device according to claim 13, **characterized in that** a polarizer (14) is arranged between the transmitter (10, 22) and a measuring region that receives the object (12) during a measurement, wherein the polarizer (14) has a rotary apparatus with which the polarizer (14) can be rotated during a measurement in order to generate different polarization directions of the radiation (20) emitted onto the object (12).

15. The device according to claim 13, **characterized in that** the transmitter (10, 22) emits polarized radiation (20), wherein the transmitter (10, 22) has a rotary apparatus with which the transmitter (10, 22) can be rotated during the measurement.

16. The device according to claim 13, **characterized in that** two transmitters (10, 22) are provided for emitting the radiation (20), wherein a polarization mirror (24) is arranged between the transmitters (10, 22) and a measuring region that receives the object (12) during a measurement, wherein the transmitters (10, 22) are arranged such that they irradiate opposite sides of the polarization mirror (24).

17. The device according to claim 16, **characterized in that** the transmitters (10, 22) are designed to emit the radiation (20) with a time offset.

18. The device according to one of claims 13 to 17, **characterized in that** the transmitter (10, 22) and the receiver (10, 22) are formed by a transceiver (10, 22), wherein a reflector (16) for the radiation (20) is arranged on a side opposite a measuring region that receives the object (12) during a measurement.

## Revendications

1. Procédé de détermination d'une contrainte d'un objet, en particulier d'un objet allongé (12), comprenant les étapes suivantes :
• l'objet (12) est irradié avec un rayonnement électromagnétique (20) avec une fréquence dans la plage de 1 GHz à 10 THz et différentes directions de polarisation, dans lequel le rayonnement (20) traverse au moins partiellement l'objet (12) et est réfléchi au niveau d'interfaces de l'objet (12),
• le rayonnement (20) est reçu après avoir au moins partiellement traversé l'objet (12) et avoir été réfléchi au niveau d'interfaces de l'objet (12),
• à partir du rayonnement (20) reçu, l'indice de réfraction du matériau de l'objet (12) est déterminé respectivement pour les différentes fractions de rayonnement polarisées,
• une contrainte de l'objet (12) est déterminée à partir d'une comparaison des indices de réfraction déterminés.

2. Procédé selon la revendication 1, **caractérisé en ce que** l'objet (12) est une fibre de verre ou un tuyau (12), en particulier un tuyau en plastique (12) ou un tube de verre (12).

3. Procédé selon l'une des revendications précédentes, **caractérisé en ce que** le rayonnement (20) irradiant l'objet (12) présente des fractions de rayonnement polarisées perpendiculairement les unes par rapport aux autres.

4. Procédé selon l'une des revendications précédentes, **caractérisé en ce que** l'indice de réfraction est déterminé à partir d'une comparaison entre le temps de propagation du rayonnement (20) lorsqu'un objet (12) est disposé dans une zone de mesure et le temps de propagation du rayonnement à travers la zone de mesure sans objet (12) disposé dans celle-ci.

5. Procédé selon l'une des revendications précédentes, **caractérisé en ce que** l'objet (12) est tubulaire, **en ce que** l'épaisseur de paroi optique d'une section de paroi de l'objet (12) ainsi que le diamètre extérieur et intérieur de l'objet (12) sont déterminés à partir du rayonnement (20) reçu, et **en ce que** l'indice de réfraction est déterminé à partir d'une comparaison entre le diamètre extérieur et intérieur de l'objet (12) et l'épaisseur de paroi optique de la section de paroi.

6. Procédé selon l'une des revendications précédentes, **caractérisé en ce qu'**après sa fabrication, l'objet (12) est soumis à un processus de refroidissement pendant la mise en œuvre du procédé.

7. Procédé selon la revendication 6, **caractérisé en ce que** pendant la mise en œuvre du procédé, l'objet (12) présente des zones qui ne sont pas encore solidifiées, et **en ce qu'**un degré de solidification de l'objet (12) est déterminé sur la base de la détermination de la contrainte.

8. Procédé selon la revendication 7, **caractérisé en ce que** lors de la détermination du degré de solidification, les indices de réfraction déterminés sont également pris en compte.

9. Procédé selon l'une des revendications précédentes, **caractérisé en ce qu'**un dispositif d'extrusion destiné à extruder l'objet (12) ou un dispositif de fabrication de fibre de verre destiné à fabriquer l'objet (12) est commandé ou réglé sur la base de la contrainte déterminée.

10. Procédé selon l'une des revendications précédentes, **caractérisé en ce qu'**un chauffage consécutif de l'objet (12) destiné à réduire une contrainte est commandé sur la base de la contrainte déterminée.

11. Procédé selon l'une des revendications précédentes, **caractérisé en ce que** la contrainte est déterminée à l'aide d'un rapport préétabli entre une biréfringence et une contrainte de l'objet (12).

12. Procédé selon l'une des revendications précédentes, **caractérisé en ce que** le rayonnement (20) émis vers l'objet (12) est mesuré de façon cohérente.

13. Dispositif de détermination d'une contrainte d'un objet (12), en particulier d'un objet allongé (12), dans lequel
• il est prévu au moins un émetteur (10, 22), lequel est conçu pour irradier l'objet (12) avec un rayonnement électromagnétique (20) avec une fréquence dans la plage de 1 GHz à 10 THz et différentes directions de polarisation, dans lequel le rayonnement (20) traverse au moins partiellement l'objet (12) et est réfléchi au niveau d'interfaces de l'objet (12),
• il est prévu au moins un récepteur (10, 22), lequel est conçu pour recevoir le rayonnement (20) après avoir au moins partiellement traversé l'objet (12) et avoir été réfléchi au niveau d'interfaces de l'objet (12),
• et il est prévu une unité d'évaluation (18), laquelle est conçue pour déterminer, à partir du rayonnement (20) reçu, l'indice de réfraction du matériau de l'objet (12) respectivement pour les différentes fractions de rayonnement polarisées, et pour déterminer une contrainte de l'objet (12) à partir d'une comparaison des indices de réfraction déterminés.

14. Dispositif selon la revendication 13, **caractérisé en ce qu'**un polarisateur (14) est disposé entre l'émetteur (10, 22) et une zone de mesure recevant l'objet (12) pendant une mesure, dans lequel le polarisateur (14) présente une unité de rotation avec laquelle le polarisateur (14) peut être tourné pendant une mesure afin de produire différentes directions de polarisation du rayonnement (20) émis vers l'objet (12).

15. Dispositif selon la revendication 13, **caractérisé en ce que** l'émetteur (10, 22) émet le rayonnement (20) polarisé, dans lequel l'émetteur (10, 22) présente une unité de rotation avec laquelle l'émetteur (10, 22) peut être tourné pendant la mesure.

16. Dispositif selon la revendication 13, **caractérisé en ce qu'**il est prévu deux émetteurs (10, 22) pour l'émission du rayonnement (20), dans lequel un miroir polarisant (24) est disposé entre les émetteurs (10, 22) et une zone de mesure recevant l'objet (12) pendant une mesure, dans lequel les émetteurs (10, 22) sont disposés de manière à irradier des faces opposées du miroir polarisant (24).

17. Dispositif selon la revendication 16, **caractérisé en ce que** les émetteurs (10, 22) sont conçus pour émettre le rayonnement (20) de façon décalée dans le temps.

18. Dispositif selon l'une des revendications 13 à 17, **caractérisé en ce que** l'émetteur (10, 22) et le récepteur (10, 22) sont formés par un émetteur-récepteur (10, 22), dans lequel un réflecteur (16) destiné au rayonnement (20) est disposé sur un côté opposé à une zone de mesure recevant l'objet (12) pendant la mesure.
